# EUROPEAN PATENT APPLICATION

(11) **EP 2 650 149 A1**
(43) Date of publication of application: **16.10.2013**
(21) Application number: 12163901.7
(22) Date of filing: 12.04.2012
(51) Int. Cl.: B60D 1/54, B60D 1/06

(54) **A ball and socket joint for a towing hook**

(71) Applicant: Thule Towing Systems B.V., 7951 CX Staphorst (NL)
(72) Inventor: Eising, Fredrik Jacob, 7951CX Staphorst (NL); Borgonje, Christian, 7951CX Staphorst (NL)
(74) Representative: Valea AB

(57) **Abstract**

A ball and socket joint (30) for a towing hook (11) for a vehicle, the ball and socket joint (30) comprising a ball portion (20) and a socket portion (40). The towing hook (11) can to be displaced between a towing position and a retracted position after assembly with the vehicle. The socket portion (40) of the ball and socket joint (30) is configured to enable the ball portion (20) to rotate at least 120 degrees about a first axis of rotation (Y, X, Z) and at least 80 degrees about a second axis of rotation (Y, X, Z), with respect to the towing position. The ball and socket joint provides for a sturdy and rigid construction while at the same time it permits the towing hook to be retracted to a compact and space saving configuration.

## Description

### TECHNICAL FIELD

The present invention relates to a ball and socket joint for a towing hook arrangement, enabling a towing hook to be displaced between a first and a second position, such as between a towing position and a retracted position.

### BACKGROUND

Towing hooks for towing e.g. trailers are commonly used today. In most cases a towing hook is mounted on the vehicle during the assembly process of the vehicle, although after sales mounting, e.g. by an authorized garage, is possible. For esthetical and practical reasons it may be desirable to have a towing hook which can be displaced between a towing position and a retracted position. Generally such towing hooks are referred to as retractable towing hooks.

There are several considerations when constructing a towing hook of the retractable kind. The available space in which a towing hook arrangement can be mounted on a vehicle varies between different manufactures and models. The movement path, or movement pattern, of the towing hook can further be very space consuming and imparts restrictions on the configuration of the towing hook arrangement. The towing hook should further, when in the retracted position, not be visible or at least not be clearly visible so as not to affect the aesthetic appearance of the vehicle. It is also important that the towing hook can be retracted to a position in which it is subjected to no, or low, risk of being damaged by the ground on which the vehicle rests or travels over, or by loose objects from the ground such as dirt or rubble.

The restricted available space in a vehicle for mounting a towing hook arrangement imparts many restrictions to the manufacturer of the towing hook arrangements, as each towing hook arrangement has to be specifically adapted to each specific vehicle model. The path along which the towing hook travels during displacement between the towing position and the retracted position needs to be specifically adapted to fit each model of the vehicle.

An example of a retractable towing hook is disclosed in the European patent EP 1,894,752 B1. The towing hook in the mentioned patent projects from a bearing housing which forms the socket portion of a ball and socket joint. The towing hook has a ball portion forming the corresponding ball of the ball and socket joint. The ball and socket joint enables the towing hook to be displaced between a towing position, also referred to as an operative position, and a retracted position, also sometimes referred to as an inoperative position. A cam track which cooperates with a gear arranged on a motor-driven axle effects displacement of the towing hook between the towing position and the retracted position. The cam track is arranged in a groove on the ball portion of the towing hook and defines a predetermined rotation path for the towing hook along which the towing hook can rotate between the towing position and the retracted position. A second rotating axle operates a lock to prevent the towing hook from rotating when in the towing position.

### SUMMARY

A ball and socket joint, adapted to connect a towing hook via a ball portion of the towing hook, to a vehicle, has generally not been very flexible in terms of providing a large variety of displacements paths. The socket portion of the ball and socket joint has to be configured to withstand the load which is imparted to the towing hook from the towable object during towing. Displaceable towing hooks, sometimes referred to as retractable towing hooks or deployable towing hooks, also require lock mechanisms to prevent the towing hook from being accidentally displaced, such lock mechanism should be durable and rigid. All these requirements impart restrictions to the flexibility of the available displacements paths of the towing hook. It also imparts restrictions to the socket portion of the ball and socket joint.

It is an object of the present invention to provide a ball and socket joint for a towing hook for a vehicle, which at least partly overcomes the above mentioned drawbacks, or at least provides for a useful alternative. The ball and socket joint comprises a ball portion and a socket portion. The socket portion of the ball and socket joint permits the ball portion to rotate about a first and a second axis of rotation enabling the towing hook to be rotationally displaced between a towing position, or optionally a release position, and a retracted position after assembly with the vehicle. The first and the second axis of rotation are arranged perpendicular to each other.

The socket portion of the ball and socket joint is configured to enable the ball portion to rotate at least **120** degrees about the first axis of rotation and at least **80** degrees about the second axis of rotation, with respect to the towing position.

The present invention provides for a ball and socket joint for a towing hook, wherein the socket portion is specifically adapted to enable the rotation of the towing hook to a great extent, while at the same time provide for a rigid and sturdy construction.

According to an aspect, the socket portion can be arranged in a housing comprising an opening through which the towing hook extends, the opening of the housing having an extension permitting said rotation of the ball portion. The opening of the housing can have an elongated extension. The sides of the opening can optionally be provided with a sloped surface, permitting the towing hook to have a diameter which increases with the distance from the ball portion of the towing hook.

According to an aspect, the socket portion is at least partly formed by the housing. The housing can provide the socket portion with structural support. In a sense, the socket portion, of the ball and socket joint, is thus partly formed by the housing.

According to an aspect, the socket portion is displaceably arranged inside of the housing. This permits the socket portion to disengage from a lock. The ball portion can be provided with grooves adapted to cooperate with protrusions arranged on the housing for example, as the ball portion of the towing hook is displaced, the protrusions disengage with grooves and thus permits the ball portion of the towing hook to rotate about an axis.

According to an aspect, the ball portion can comprise a towing hook having a first and a second end, wherein the first end is arranged with the ball portion of the ball and socket joint, and the second end is adapted to connect to a towable object. The ball portion can thus be adapted to be connected with a towing hook, e.g. releaseably connected or permanently connected, or optionally the ball portion can be formed in a unitary piece of material with that part of the towing hook which is adapted to be connected to the towable object, i.e. the second end of the towing hook.

According to an aspect, the towing hook is adapted to be positioned substantially in an up-side down position when the towing hook is positioned in the retracted position, with respect to the towing position. In this embodiment, the socket portion is specifically adapted to permit the towing hook to be positioned substantially in an upside down position, and optionally the housing if such is present.

According to an aspect, the ball and socket joint comprises a housing having an upper side, a ground facing side opposite of said upper side, and supporting sides connecting the upper side with the ground facing side, wherein the towing hook extends through an opening of the housing. The opening of the housing extends from the ground facing side, to the upper side of the housing, thus permitting the towing hook to be rotated between a towing position to a retracted position, and more specifically the ball portion of the towing hook to rotate at least **120** degrees about the first axis of rotation and at least **80** degrees about the second axis of rotation, with respect to the towing position.

According to an aspect, the present invention also relates to a towing hook arrangement comprising a towing hook and a ball and socket joint, as described herein. The towing hook having a first and a second end, wherein the first end is arranged with the ball portion of the ball and socket joint, and the second end is adapted to connect to a towable object.

### BRIEF DESCRIPTION OF THE DRAWINGS

Non-limiting embodiments of the present invention will be described in greater detail with reference to the accompanying figures in which;
figure 1 shows parts of the rear of a vehicle comprising a towing hook arrangement according to an embodiment, the towing hook being in the towing position;
figure 2 shows parts of the rear of a vehicle comprising the towing hook arrangement of figure 1, the towing hook positioned in the retracted position;
figure 3a shows the towing hook arrangement of figure 1 in greater detail;
figure 3b shows the towing hook arrangement of figure 1 in greater detail, the towing hook being positioned in the retracted position;
figure 4 shows a towing hook comprising a ball portion;
figures 5a-5l show the towing hook and the socket portion and the towing hook in different positions and in three different views.
figures 6a-6c show figures 5a, 5i, 5l respectively in greater detail and;
figure 7 shows a towing hook arrangement comprising a ball and socket joint, a towing hook, and a housing, the towing hook being in the towing position.

### DETAILED DESCRIPTION OF PREFERRED EMBODIMENTS

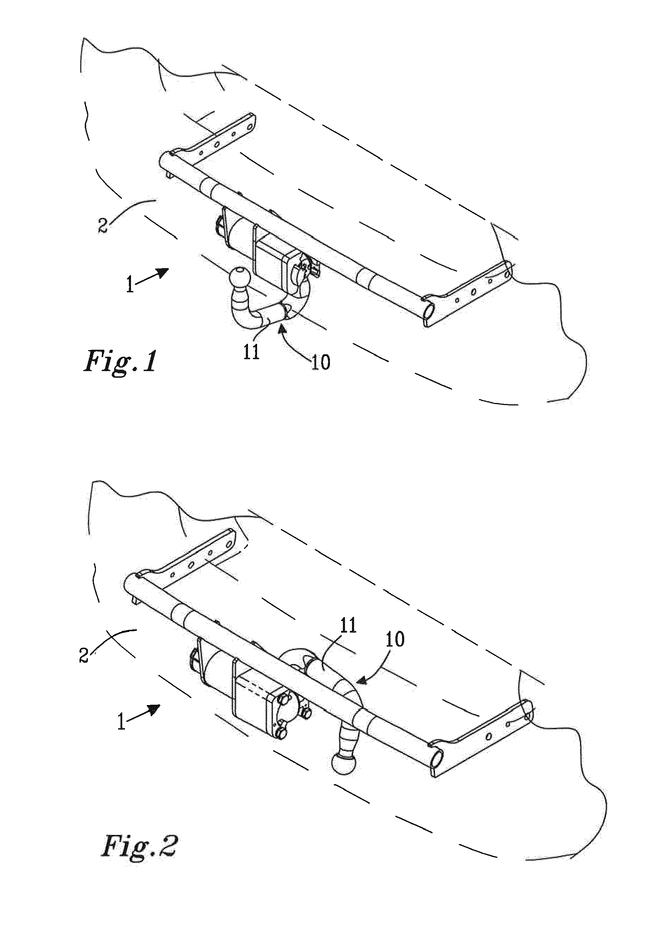

Figure 1 shows parts of a vehicle 1 and a towing hook arrangement 10 comprising a towing hook 11. The vehicle 1 is illustrated with parts of the rear of the vehicle 1 and specifically a bumper 2. For the sake of clarity, the rear of the vehicle has been illustrated with dashed lines and partly transparent. The towing hook 11, in the shown embodiment, can be displaced between a towing position, shown in figure 1, and a retracted position, shown in figure 2. In the towing position, the towing hook 11 is configured to be attached to a towable object in such a manner that the vehicle 1 can tow the towable object. In the retracted position, the towing hook 11 has been retracted to a position behind the bumper 2 of the vehicle 1 and is at least partly concealed from view by the bumper 2 of the vehicle 1. The towing hook 11 is enabled to be displaced between the towing position and the retracted position by a ball and socket joint.

The towable object could be any object which is adapted to be temporarily mounted on a towing hook, such as a trailer, a caravan, a bike carrier, a luggage carrier, or similar. The towing position is a position in which a towable object can be towed behind the vehicle and the retracted position is generally a position in which the towing hook has been displaced from the towing position, e.g. to a position behind the bumper of the vehicle. Instead of being displaced to a retracted position, the towing hook can be displaced to a second position, such as second towing position, a maintenance position, or any other suitable position.

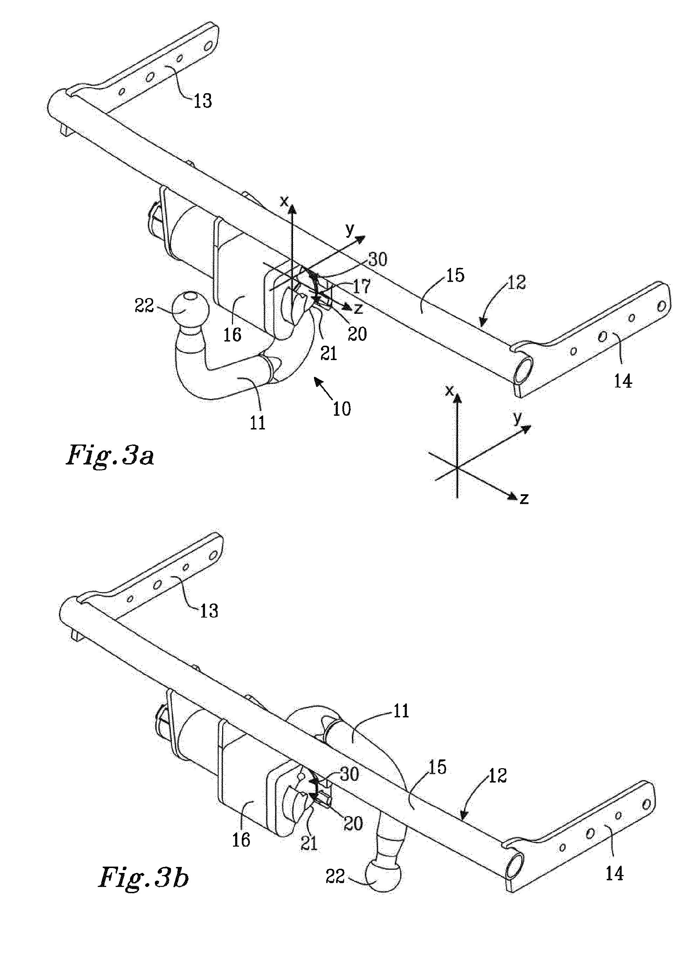

Figure 3a shows the towing hook arrangement 10 comprising an attachment arrangement 12 to attach the towing hook arrangement 10 to the vehicle. Figure 3b shows the embodiment of figure 3a but with the towing hook 11 in the retracted position. The attachment arrangement 12 can be adapted to fit substantially any vehicle, in the shown embodiment, the attachment arrangement 12 is adapted to be mounted to the chassis of a car such as a SUV. The attachment arrangement 12 is formed by two mounting brackets 13, 14 and a bar 15 extending there between. Attached to the bar 15 of the attachment arrangement 12 is a housing 16 which is adapted to at least partly form, or to encompass, the ball and socket joint of the towing hook 11.

The towing hook 11 comprises a ball portion 20 forming a part of the ball and socket joint 30 enabling the towing hook 11 to pivot, or rotate, between different positions. As is noted, the housing 16 does not need to fully enclose the ball portion 20 of the towing hook 11. The housing 16 comprises at least one opening 17 extending through the wall of the housing 16. The opening 17 permits the towing hook 11 to extend out from the socket portion partly formed by the housing 16 and further permits it to rotate to the desired position. The housing 16 can be formed in one unitary piece of material, or be formed by distinct components attached together, as in the shown embodiment in figure 3a.

According to an aspect, the opening 17 can be configured to permit the towing hook 11 to be displaced between the towing position and the retracted position. Optionally the opening 17 of the housing 16 has an extension enabling the towing hook 11 to be rotated more than 140 degrees, optionally more than 160 degrees about at least one axis of rotation. In the shown embodiment, the opening 17 of the housing 16 has an extension enabling the towing hook 11 to be rotated to an upside down position, as seen in figure 2 and 3b.

As illustrated in figure 3c, the ball portion 20 has a point of rotation P, centrally positioned in said ball portion, about which the ball portion can rotate. In the shown embodiments, the ball portion 20 has a limited number of axes of rotation about which the ball portion can rotate at one time. In the shown embodiment, the towing hook 11 is prevented from rotating freely in arbitrary directions about the point of rotation P; instead it follows a predetermined path as will be described in greater detail herein.

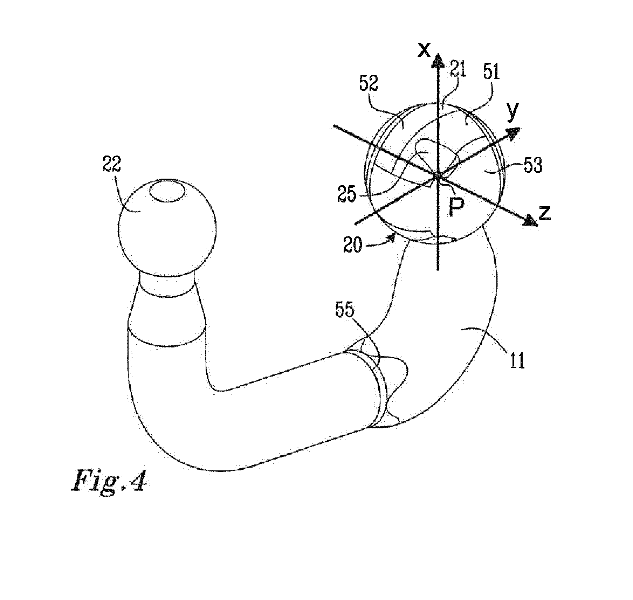

For the purpose of orientation, the following axes of rotation will be used herein. X axis, corresponding to the height direction of the vehicle 1, the Y axis corresponding to the longitudinal extension of the vehicle, and the Z axis, corresponding to the transverse extension of the vehicle. The extensions of the vehicle 1 are to be understood as when the vehicle 1 is in a ready to use state. In this sense the height direction of the vehicle 1 and the X axis can also be referred to as a vertical axis. The X, Y and Z axes are perpendicular to each other and intersect at an origin. As described herein, the origin is the point of rotation P. In some drawings the X, Y and Z axes are illustrated at the side of the ball portion 20 of the towing hook and the point of rotation P for the sake of clarity, however, the point of rotation P and the origin of the X, Y and Z axes are still considered to be in the center of the ball portion. Also notable in figure 4 is a groove 25 arranged on the ball portion 20 to cooperate with protrusions of the housing 16 as will be described below.

The ball portion 20 of the towing hook 11 shown in figure 4 has a modular configuration, i.e. the ball portion of the towing hook 11 is assembled by at least a first and a second distinct component. When manufacturing the ball portion 20 of the towing hook 11, the ball portion 20 is assembled by distinct components which enable a manufacturer to allocate different properties or functions to the ball portion, and more importantly to different portions, or sections, of the ball portion of the towing hook. Such properties, or functions, can be by way of example only; adapting the form of the ball portion; providing specific functions to specific sections or parts of the ball portion; and/or providing specific material properties to the ball portion, just to mention a few.

It should be noted that even if a ball portion comprises distinct components inside of the ball portion, such distinct component does not necessarily form the ball portion. The distinct components of the ball portion defined herein forms a part of the peripheral surface of the ball portion, and is thus adapted to cooperate with the socket portion of the ball and socket joint.

In figure 4, the ball portion 20 is assembled from a plurality of distinct components, in the shown embodiment, three distinct components 51, 52, 53. The first distinct component 51 is manufactured in the same material as the second end 22 of the towing hook 11, and connected thereto via a connection 55, although second end 22 of the towing hook 11 and the first distinct component 51 can be formed in one unitary piece of material. The second and third distinct components 52, 53 can be manufactured in another material than the first distinct component 51. In the shown embodiment, the first distinct component 51 is manufactured in steel, and the second and third distinct components are manufactured using a thermoplastic material. The ball portion 20 can also be formed in one unitary piece of material instead of using distinct components.

The towing hook 11 has a first and a second end 21, 22 in which the first end 21 comprises the ball portion 20 and the second end 22 is adapted to be attached to the towable object. In the shown embodiment, the second end 22 of the towing hook 11 comprises a towing ball adapted to form a ball and socket joint with the towable object, the socket being a socket portion on a trailer for example.

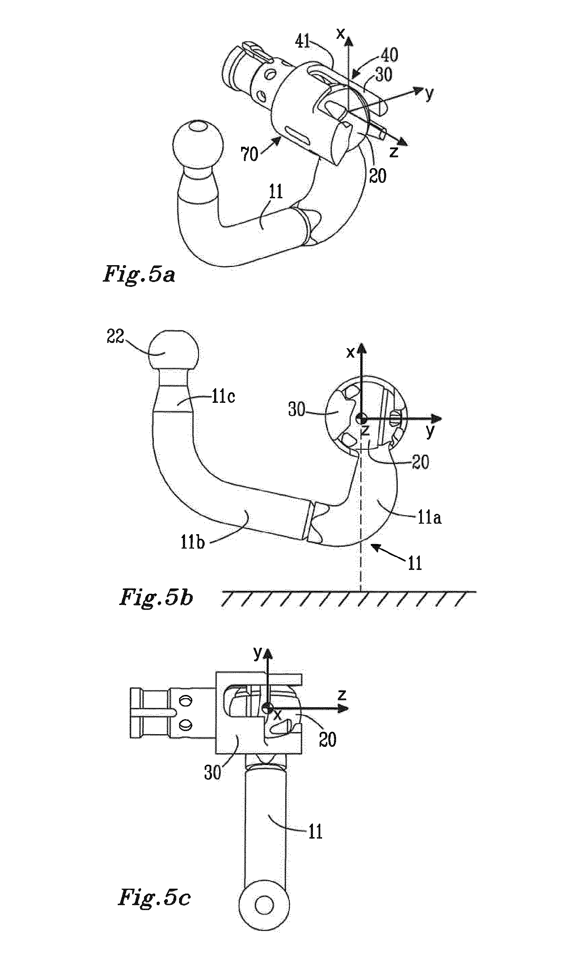

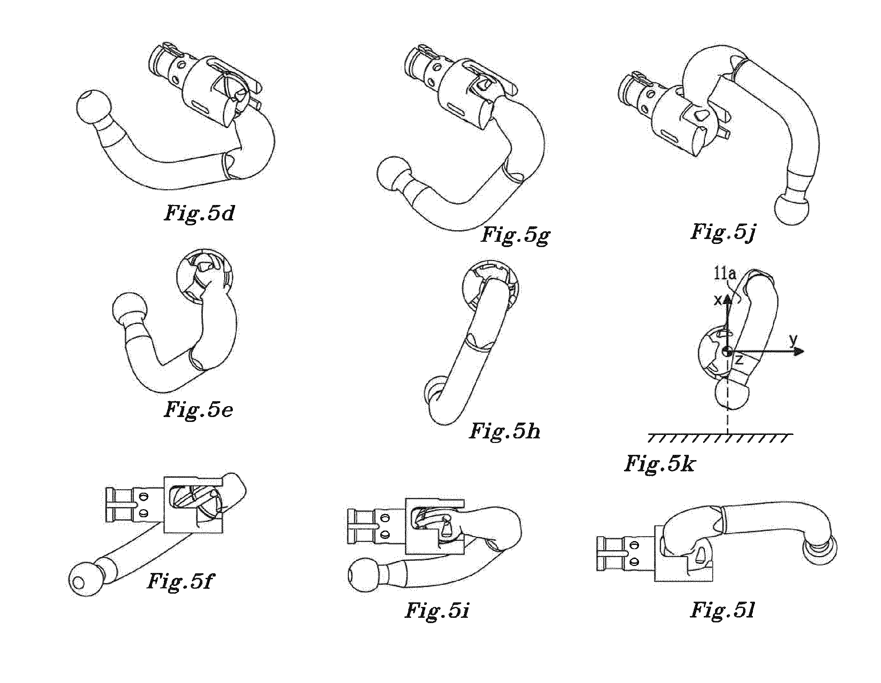

Figures 5a-5l show parts of a socket portion, 40, in the shown embodiment formed by a push and pull arrangement 70, and the towing hook 11 in three different perspectives; first perspective 5a, 5d, 5g, 5j, second perspective 5b, 5e, 5h, 5k and third perspective 5c, 5f, 5i, 5l. The second perspective is illustrated with a view along the Z axis, and the third perspective along the X axis. Each perspective is further illustrated with the towing hook 11 in four different positions; position one; 5a; 5b; 5c; position two; 5d; 5e; 5f; position three; 5g; 5h; 5i and; position four; 5j; 5k; 5l. In the first position 5a, 5b, 5c, the towing hook 11 is in the towing position, and in the fourth position 5j, 5k, 5l, the towing hook 11 is in the retracted position. The second and third positions are intermediate positions which show the towing hook 11 in two separate positions as the towing hook 11 is displaced between the towing position and the retracted position.

It should be noted that the ball portion 20 of the towing hook 11 can be displaced within the housing 16, in the shown embodiment, to disable a lock function. This relative displacement positions displaces the towing hook 11 from a towing position to a release position. Below the rotation of the ball portion 20 and the towing hook 11 will be described in greater detail. It should be noted that the rotational displacement described below can be done from the towing position or from a release position dependent on the configuration of lock mechanism used for the ball and socket joint.

Figures 5a, 5b, 5c, show the towing hook 11 when positioned in the release position, i.e. a position in which the ball portion 20 of the towing hook 11 is ready to be rotated to a retracted position. The ball portion 20 of the towing hook 11 has thus been slightly displaced to disable a lock mechanism.

A section referred to as the ball portion section 11 a extends from the ball portion 20 of the ball and socket joint 30. In the towing position; the ball portion section 11a of the towing hook 11 extends substantially along the X axis and in a direction towards the ground, which is schematically indicated in figure 8b, when the vehicle is positioned in a normal and ready to use position. The ball portion section 11 a of the towing hook 11 transcends to a middle section 11 b via a first bend. The length of the middle section 11 b of the towing hook 11 is generally configured to position the second end 21 of the towing hook 11 in a suitable position with respect to the rear of the vehicle. The middle section 11 b of the towing hook 11 thereafter transcends via a second bend to a third section 11c comprising the second end 22 of the towing hook 11. The third section 11 c extends from the middle section 11 b of the towing hook 11 in a direction away from the ground and substantially along the X axis.

As noted in figure 5k, the ball portion 20 of the towing hook 11 has been rotated so that the towing hook 11 is in the retracted position. The ball portion section 11 a of the towing hook 11 is now positioned so that it extends away from the ground, and the middle section 11 b of the towing hook 11 is on an opposite side of the point of rotation P and the Y axis. This position is also referred to as an 'upside down' position, i.e. the middle section of a towing hook is positioned substantially opposite of an axis which extends substantially parallel with the ground, as shown in figures 5b and 5k, and with respect to its original position. In figure 5b and 5k, the middle section 11 b is positioned on the opposite side of the Y axis after being displaced to the retracted position.

The rotation of the ball portion 20 can be described by a superposed rotation of the X, Y, Z axes, although when described herein, the degree of rotation is described axis by axis for the sake of clarity. Dependent on the path along which the towing hook 11 is displaced, the ball portion 20 of the towing hook 11 can rotate about; one axis, two superposed axes, or three superposed axes.

In figure 5k, the towing hook 11 has been rotated, with respect to the position shown in figure 5b, about the Y axis approximately 160 degrees, about the X axis approximately 80 degrees, and about the Z axis approximately 20 degrees. The superposed rotation of the X, Y, and Z axes will position the towing hook 11 in the retracted position as shown in figures 2, 3b, 5j, 5k, and 5l. The socket portion 40 of the ball and socket joint 30 thus permits the ball portion 20 to rotate about at least a first and a second axis of rotation, enabling the towing hook 11 to be rotationally displaced between a towing position, or optionally a release position, and a retracted position. The socket portion 40 of the ball and socket joint 30 enables the ball portion 20 to rotate at least **120** degrees about the first axis of rotation, in this case the Y axis, and at least **80** degrees about the second axis of rotation, in this case the X axis, with respect to the towing position, or the release position. The socket portion 40 of the ball and socket joint 30 can be adapted to enable the ball portion 20 to rotate at least **120, 125, 130, 135, 140, 145 or 150** degrees, about the first axis of rotation, in this case the Y axis, and at least **80, 85, 90, 95 or 100** degrees about the second axis of rotation, in this case the X axis, with respect to the towing position, or the release position.

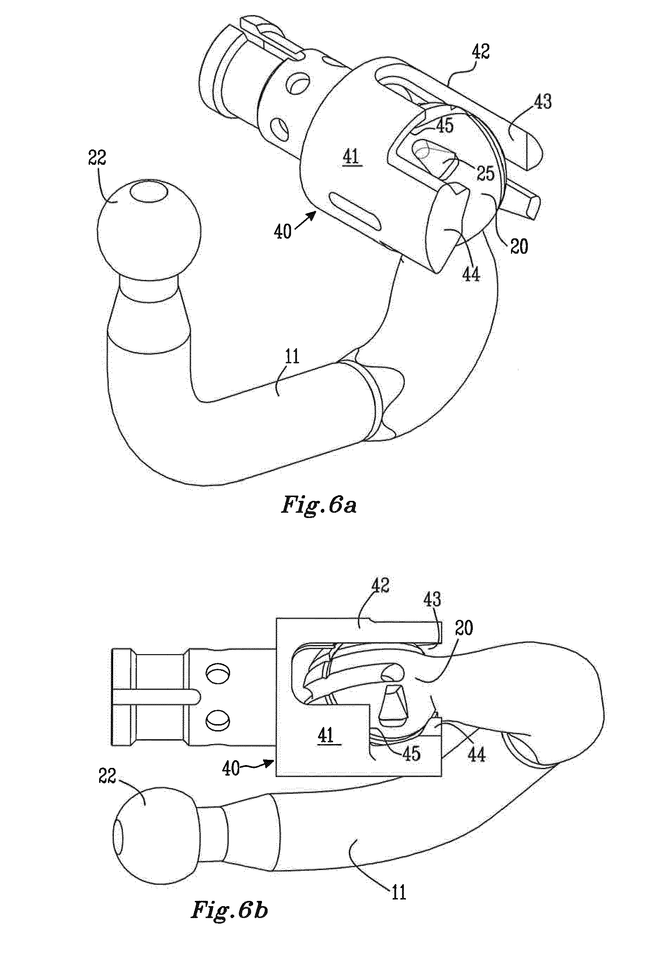

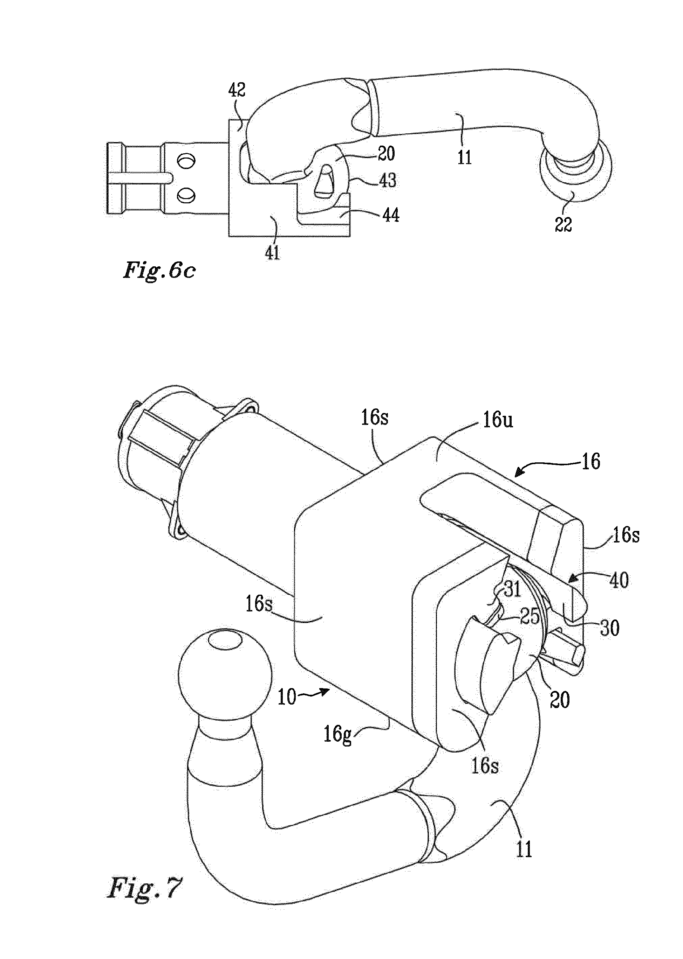

Hereafter the socket portion 40 will be described in greater detail using; figure 6a showing figure 5a in greater detail; figure 6b showing figure 5i in greater detail and; figure 6c showing figure 5l in greater detail. The socket portion 40 is as mentioned configured to permit the ball portion 20, and thus the towing hook 11, to be rotated to an upside down position. The socket portion 40, as shown in the embodiment of figures 5a-5l, is formed by a first and a second wall section 41, 42 forming a slot 43 therebetween through which the ball portion section 11 a of the towing hook 11 extends.

The first wall section 41 comprises a grip portion 44 adapted to partly encompass the ball portion 20. The grip portion 44 of the first wall section 41 can serve different purposes; it can be adapted to enable displacement of the ball portion 20; it can be adapted to retain the ball portion 20 or; it can be adapted to serve both these purposes.

During manufacturing and assembly of the ball and socket joint 30 of the towing hook arrangement 10, the ball portion 20 can be inserted through the slot 43. During the insertion of the ball portion 20 of the towing hook 11, the first and the second wall sections 41, 42 are slightly elastically deformed so as to permit the ball portion 20 to be inserted through the slot 43 of the socket portion 40. When the ball portion 20 of the towing hook 11 has been inserted, the first and the second wall sections 41, 42 return to their initial positions. In this sense, first and the second wall sections 41, 42 operate substantially similar to a snap in connection. Suitable material could be spring steel to achieve this property. Optionally, the first and the second wall sections 41, 42 can be formed by two distinct members connected together after the ball portion 20 of the towing hook 11 has been positioned.

The first or the second wall sections 41, 42 can also be provided with an additional slot, optionally one or more slots, as shown in figure 6a for example.

A cut out 45 in the first wall section 41 permits a protrusion of the housing 16 to engage the groove 25 of the ball portion 20 to form a lock mechanism, preventing the ball portion 20 from rotation when being positioned in the towing position (shown in figures 3a-3b).

Figure 7 shows the towing hook arrangement 10 in greater detail, further visible in figure 7 are the towing hook 11, the ball portion 20 of the towing hook 11, the housing 16, the ball and socket joint 30 formed by the ball portion 20 of the towing hook 11 and the socket portion 40, the groove 25 of the ball portion 20 of the towing hook 11 and corresponding protrusion 31, which also can be referred to as the lock protrusion 31, of the housing 16.

The socket portion 40 can be adapted to cooperate with the housing 16 in the sense that it can provide for a slip surface to the ball portion 20 while the housing 16 structurally supports the socket portion 40 and thus forms a part of the ball and socket joint 30. Optionally, the socket portion 40 can by itself form the ball and socket joint 30 in terms of providing a slip surface of the ball portion 20 and be rigid enough for the ball and socket joint. In the shown embodiments, the housing 16 structurally supports the socket portion 40, in terms of that the socket portion 40 is arranged inside of the housing 16 and that the housing 16 is adapted to provide structural integrity to the ball and socket joint 30 during towing.

Also notable is that the socket portion 40 can be operated as a push and/or pull arrangement, i.e. it can be effectively used to displace the ball portion 20 of the towing hook 11 from a first to a second position. The first position can be a towing position and the second position can be a retracted position form example. The socket portion 40 can be configured to be displaced within the housing 16.

As is noted, the housing 16 also comprises an opening which is adapted to permit the rotation of the towing hook 11. More specifically, it should permit a rotation about the Y axis approximately at least 120 degrees, about the X axis approximately 80 degrees, and optionally about the Y axis approximately 20 degrees. The housing 16 should permit the ball portion 20 to rotate about at least a first and a second axis of rotation, enabling the towing hook 11 to be rotationally displaced between a towing position, or optionally a release position, and a retracted position.

The housing 16 has an upper side 16u, a ground facing 16g side opposite of said upper side 16u, and supporting sides 16s connecting the upper side 16s with the ground facing side 16g. The towing hook 11 extends through the opening 17 of the housing 16. The opening 17 of the housing 16 extends from the ground facing side 16g, to the upper side 16u of the housing 16, thus permitting the towing hook 11 to be rotated between a towing position to a retracted position, and more specifically the ball portion 20 of the towing hook 11 to rotate at least 120 degrees about a first axis of rotation and at least 80 degrees about a second axis of rotation, with respect to the towing position.

Optionally, the slot, or opening 17, of the housing 16 is slightly longer than the slot 43 of the socket portion 40, thus permitting the ball portion 20 of the towing hook 11 to be rotated slightly more than the ball socket portion 40. This can be advantageous as the ball portion 20 of the towing hook 11 can be displaced from a towing position to a release position, and subsequently rotated.

Other features and functions can be changed or combined without departing from the scope of the invention.

## Claims

1. A ball and socket joint (30) for a towing hook (11) for a vehicle, said ball and socket joint (30) comprising a ball portion (20) and a socket portion (40),
said socket portion (40) of said ball and socket joint (30) permitting said ball portion (20) to rotate about a first and a second axis of rotation (X, Y, Z), enabling said towing hook (11) to be displaced between a towing position and a retracted position after assembly with said vehicle,
said first and said second axis of rotation (X, Y, Z) being arranged perpendicular to each other,
**characterized in that**
said socket portion (40) of said ball and socket joint (30) is configured to enable said ball portion (20) to rotate at least 120 degrees about said first axis of rotation (Y, X, Z) and at least 80 degrees about said second axis of rotation (Y, X, Z), with respect to said towing position.

2. The ball and socket joint (30) according to claim 1, wherein said socket portion (40) is arranged in a housing (16), and in that said housing (16) comprises an opening (17) through which said towing hook (11) extends, said opening (17) of said housing (16) having an extension permitting said rotation of said ball portion (20).

3. The ball and socket joint (30) according to claim 2, wherein said socket portion (40) is at least partly formed by said housing (16).

4. The ball and socket joint (30) according to claim 1, wherein said socket portion (40) is displaceably arranged inside of said housing (16).

5. The ball and socket joint (30) according to any of claims 1-4, wherein said housing (16) provides said socket portion (40) with structural support.

6. The ball and socket joint (30) according to any of claims 1-5, wherein said ball portion (20) comprises a towing hook (11), said towing hook (11) having a first and a second end (21, 22), said first end (21) being arranged with said ball portion (20) of said ball and socket joint (30), and said second end (22) being adapted to connect to a towable object.

7. The ball and socket joint (30) according to claim 6, wherein said towing hook (11) is adapted to be positioned in an upside down position when said towing hook (11) is positioned in said retracted position, with respect to said towing position.

8. The ball and socket joint (30) according to any preceding claims, wherein said socket portion (40) is comprises a first and a second wall section (41, 42), and in that said first and said second wall sections (41, 42) defines a slot (43) through which said towing hook (11) can extend.

9. The ball and socket joint (30) according to claim 8, wherein at least one of said first or said second wall sections (41, 42) comprises a grip portion (44) adapted to encompass at least a part of said ball portion (20) of said towing hook (11).

10. A towing hook arrangement comprising a towing hook (11) and a ball and socket joint (30) according to any of claims 1-9, said towing hook (11) having a first and a second end (21, 22), said first end (21) being arranged with said ball portion (20) of said ball and socket joint (30), and said second end (22) being adapted to connect to a towable object.
